# DEMANDE DE BREVET EUROPEEN

(11) **EP 4 621 361 A1**
(43) Date de publication de la demande: **24.09.2025**
(21) Numéro de dépôt: 25163354.1
(22) Date de dépôt: 12.03.2025
(51) Int. Cl.: G01F 23/68, G01F 23/74, G01F 23/80, B63B 43/00, G01F 23/76

(54) **SYSTEME DE DETECTION ET DE MESURE DE L'ENVAHISSEMENT D'UN ENGIN FLOTTANT**

(30) Priorité: 22.03.2024 FR 2402909
(71) Demandeur: Coriton, Pascal, 56550 Locoal Mendon (FR)
(72) Inventeur: Coriton, Pascal, 56550 Locoal Mendon (FR)
(74) Mandataire: Oak & Fox

(57) **Abrégé**

Système de détection et de mesure d'un envahissement d'un engin flottant par l'eau, ledit système comprenant :
▪ Au moins trois dispositifs de détection d'une hauteur d'eau (3) agencés dans différentes zones d'un premier compartiment d'un navire, chaque dispositif de détection (3) comportant :
▪ un corps longitudinal (31) agencé verticalement, ledit corps longitudinal (31) comportant une ouverture inférieure permettant à un volume d'eau entrant de faire évoluer un flotteur (40) le long dudit corps longitudinal (31) ;
▪ un flotteur (40) maintenu libre d'évoluer dans le corps longitudinal (31);
▪ un capteur (29) mesurant et détectant une donnée de déplacement dudit flotteur (40) ;

▪ Un calculateur pour calculer l'évolution de la hauteur d'eau en temps réel à partir de l'ensemble des mesures de chaque dispositif (3) et estimer le temps d'atteinte d'une hauteur d'eau donnée.

## Description

### Domaine de l'invention

Le domaine de l'invention se rapporte à celui des systèmes permettant de prévenir et informer une avarie par envahissement d'eau et/ou d'un fluide à bord d'un engin flottant. Le domaine de l'invention se rapporte plus particulièrement à celui des systèmes permettant de prévenir le naufrage d'un navire pour son évacuation ou pour effectuer une opération de sauvetage. Plus particulièrement, le domaine de l'invention se rapporte à celui des systèmes permettant de détecter et mesurer l'envahissement d'un engin flottant pour générer un indicateur du temps restant avant l'envahissement complet d'au moins un compartiment dudit engin flottant.

### État de la technique

Actuellement, on connaît dans l'art antérieur des systèmes qui permettent de détecter la présence d'eau dans un compartiment d'un navire. Toutefois, un inconvénient des systèmes existants est qu'ils ne permettent pas de quantifier le niveau d'envahissement, c'est-à-dire de mesurer la quantité d'eau à un instant donné sur une valeur de hauteur et/ou de volume et/ou de pourcentage de hauteur.

Il existe une difficulté à mesurer la quantité d'eau lors d'un envahissement. Notamment, un problème de la mesure est lié à la fiabilité de cette dernière.

Plusieurs problèmes sont susceptibles d'altérer la mesure de l'envahissement.

Un premier problème est lié à la position de la détection, il est possible que les détecteurs, du fait du mouvement du navire, ne permettent pas d'estimer un niveau d'envahissement rapidement puisque ce dernier peut subir des mouvements de roulis ou de tangages. Lors d'un envahissement, l'eau pénétrant dans un compartiment peut mettre un certain temps avant de constituer un niveau d'eau mesurable en chaque point du compartiment. Au début d'une avarie causant une voie d'eau dans un compartiment d'un navire, l'eau peut s'accumuler sur un côté du navire et peut ne pas être détectée tout de suite si le dispositif de détection est situé à l'opposé et que l'engin flottant gite.

Un second problème est lié à la fiabilité de la détection. En effet, des voies d'eau bénignes peuvent être présentes et déclencher une fausse détection. L'eau peut par exemple s'accumuler dans un endroit d'un compartiment sans pour autant qu'une voie d'eau menaçante ne soit présente.

Enfin, un problème des systèmes actuels est qu'ils ne permettent pas d'évaluer le temps restant avant un envahissement critique du navire permettant une évacuation par exemple.

Il existe un besoin de définir une solution permettant de détecter un envahissement et de suivre de manière fiable son évolution en la mesurant.

### Résumé de l'invention

Selon un aspect, l'invention concerne un système de détection et de mesure d'un envahissement d'un engin flottant par l'eau, ledit système comprenant :
▪ au moins deux dispositifs de détection d'une hauteur d'eau agencés dans différentes zones d'un premier compartiment d'un engin flottant, chaque dispositif de détection comportant :
   ▪ un corps longitudinal agencé verticalement, ledit corps longitudinal comportant une ouverture inférieure permettant à un volume d'eau entrant de faire évoluer un flotteur le long dudit corps longitudinal ;
   ▪ un flotteur maintenu libre d'évoluer dans le corps longitudinal, ledit flotteur comportant un moyen pour réfléchir un faisceau lumineux ;
   ▪ un émetteur optique agencé à l'extrémité supérieure dudit corps longitudinal et générant un faisceau optique en direction dudit flotteur;
   ▪ un capteur mesurant et détectant le faisceau réfléchi ;
   ▪ une horloge permettant de mesurer le temps d'aller-retour du faisceau;
   ▪ un moyen de communication filaire ou sans fil pour transmettre les données mesurées à une unité de calcul ;
▪ une source d'énergie électrique pour alimenter au moins l'émetteur optique ;
▪ un équipement de supervision distant comportant :
   ▪ une interface de communication pour recevoir les données émises par chaque dispositif de détection ;
   ▪ une mémoire pour enregistrer les données reçues ;
   ▪ un calculateur pour calculer l'évolution de la hauteur d'eau en temps réel à partir de l'ensemble des mesures de chaque dispositif et estimer le temps d'atteinte d'une hauteur d'eau donnée ;
▪ une alarme pour émettre une première alerte en cas de détection d'une hauteur d'eau prédéfinie atteinte ;
▪ une interface utilisateur pour générer une représentation du niveau d'envahissement.

Un avantage est d'assurer la détection et la mesure d'une hauteur d'eau fiable et de permettre une mesure de manière continue dans le temps lors d'un envahissement d'un navire par l'eau.

Selon un mode de réalisation, l'émetteur optique est un émetteur laser. Un avantage est la fiabilité et la précision de la mesure.

Selon un mode de réalisation, au moins un dispositif de détection comprend une ouverture formant une fente et permettant de visualiser la course du flotteur à l'intérieur du corps longitudinal. Un avantage est de faciliter des opérations de maintenance et de contrôle du bon fonctionnement du flotteur.

Selon un mode de réalisation, quatre dispositifs de détection sont agencés aux quatre coins d'un premier compartiment. Un avantage est de réaliser une mesure fiable quelque soit le roulis ou le tangage du navire.

Selon un mode de réalisation, trois dispositifs de détection sont agencés en trois positions d'un premier compartiment. Un avantage est de tirer d'un bon compromis entre le nombre de dispositif devant être installés et la précision de la mesure.

Selon un mode de réalisation, le calculateur effectue un calcul d'une moyenne pondérée du niveau d'eau mesuré par l'ensemble des dispositifs de détection agencés dans le premier compartiment pour calculer l'envahissement moyen d'eau dans ledit compartiment. Un avantage est de calculer le niveau d'eau au centre d'axe d'un compartiment en s'affranchissant des fluctuations du niveau d'eau dans le compartiment.

Selon un mode de réalisation, au moins un dispositif de détection est fixé à une partie fixe du premier compartiment, ladite fixation permettant un degré de liberté dudit dispositif de détection autour d'un axe perpendiculaire au plafonnier dudit premier compartiment. Un avantage est d'augmenter la fiabilité de la mesure en mesurant un niveau d'eau dans un compartiment indépendant de l'orientation du navire.

Selon un mode de réalisation, le système comprend au moins une console distante comportant un calculateur et une interface graphique, l'interface graphique représentant une pluralité de jauges associées chacune à un compartiment, chaque compartiment étant équipé d'au moins un dispositif de détection, chaque jauge étant graduée et affichée au sein d'une représentation du compartiment, l'interface graphique générant également un premier indicateur du niveau d'eau présent dans lesdits compartiments représentés et un second indicateur de durée estimant le temps au bout duquel chaque compartiment sera envahi à 100%.

Un avantage est de superviser l'ensemble des compartiments d'un navire ou plus généralement d'un engin flottant afin de mesurer la criticité d'un envahissement et d'engager des actions correctives le plus rapidement possible.

Selon un mode de réalisation, une estimation de l'envahissement du premier compartiment à une proportion donnée de la hauteur dudit premier compartiment est réalisée par une série de calculs de l'évolution de la hauteur d'eau mesurée au sein d'au moins un dispositif de détection pour en déduire un modèle de progression ou de régression de l'envahissement. Un avantage est de prédire des actions avec le plus de précision possible, notamment une évacuation du navire.

Selon un mode de réalisation, le modèle d'envahissement est configuré pour calculer une vitesse d'envahissement et une accélération ou une décélération de l'envahissement. Un avantage est de mesurer la progression et la vitesse de la progression afin de prédire un naufrage ou l'irréversibilité du naufrage et donc d'anticiper une évacuation du navire.

Selon un mode de réalisation, une estimation de l'envahissement total du premier compartiment est réalisée par une série de calculs de l'évolution de la hauteur d'eau mesuré au sein d'au moins un dispositif de détection.

Selon un mode de réalisation, une estimation de l'envahissement du premier compartiment est réalisée par une série de mesures de la hauteur d'eau au sein d'une pluralité de dispositifs de détection, l'ensemble des mesures réalisées au sein d'une pluralité de dispositifs de détection étant utilisé pour calculer une moyenne entre lesdites mesures afin de produire un modèle d'évolution de l'envahissement d'un compartiment.

Selon un mode de réalisation, le système comprend un calculateur comparant les mesures d'une pluralité de dispositifs de détection sur une période de temps prédéfinie, la différence de niveaux d'eau mesurée entre deux dispositifs de détection prise en combinaison avec le relevé de différentes positions de la coque de l'engin flottant sur la ligne d'eau permettant de déduire une fausse détection.

Un avantage est de permettre de détecter une fausse détection et d'engager une action de vérification du bon fonctionnement du système.

Selon un mode de réalisation, le système comprend :
▪ une étape d'estimation du temps restant avant l'atteinte d'une première donnée caractérisant la stabilité critique de l'engin flottant est évaluée en temps réel, ladite première donnée correspondant au nombre de compartiments envahissables maximal avant de dépasser un seuil de risque donné de chavirement dudit engin flottant ;
▪ une étape d'affichage du temps restant avant l'atteinte de la première donnée sur un afficheur.

Un avantage est de permettre d'anticiper une évacuation ou non d'un navire.

Selon un mode de réalisation, le temps restant avant l'atteinte d'une première donnée caractérisant la stabilité critique de l'engin flottant est estimé à partir d'un ensemble de paramètres comportant :
▪ un nombre de compartiment(s) de l'engin flottant,
▪ une donnée caractérisant la dynamique de l'envahissement de chaque compartiment,
▪ de la première donnée caractérisant la stabilité critique,
ladite estimation comportant une étape de hiérarchisation en continu des compartiments susceptibles d'être considérés comme envahis le plus rapidement afin d'estimer et mettre à jour ledit temps restant.

Un avantage est de permettre un calcul pour un grand nombre de navire et d'adapter le calcul de la stabilité critique à différentes architectures de navires.

Selon un mode de réalisation, le temps restant avant l'atteinte d'une première donnée caractérisant la stabilité critique de l'engin flottant est également estimé à partir d'un facteur de cloisonnement prédéfini et associé à l'engin flottant.

Selon un mode de réalisation, le flotteur comprend un agent à libération prolongé, ledit agent étant agencé sur la partie du flotteur destiné à être immergée lors d'un envahissement, ledit agent à libération prolongée permettant de modifier la transmission de la lumière localement dans le volume d'eau au voisinage du flotteur et permettant de réfléchir tout ou partie du faisceau laser émis par l'émetteur optique.

Un avantage est de renforcer la fiabilité de la mesure de la présence d'eau et la mesure de la hauteur d'eau en assurant qu'une partie du signal soit réfléchi.

Le système de l'invention permet d'alerter en cas d'un envahissement détecté. En outre, le système de mesure et de traitement de données permet d'évaluer, de gérer un évènement d'envahissement par une animation dynamique en continu. Il permet d'enregistrer et stocker l'évènement afin de le reproduire par des logiciels pour une exploitation des données ultérieures. Ces données enregistrées peuvent alors être utilisées pour restituer une chronologie et l'évolution de l'envahissement. Le système de l'invention permet d'apporter une connaissance aboutie de l'envahissement. Ces données peuvent être utilisées par exemple à des fins juridiques ou assurancielles.

Par ailleurs, le système de l'invention permet de prédire le moment de stabilité critique afin d'envisager ou pas une opération d'évacuation. Le système de mesure et de traitement des données de l'envahissement est une invention qui peut être installé sur des engins flottants existant ou à construire, avec ou sans présence humaine tel que des navires, des pontons, des bouées, ou encore des drones.

Un autre avantage est que le système est d'installation simple.

Le système de mesure et de traitement des données de l'envahissement présenté dans l'invention démontre l'intérêt de quantifier un envahissement afin de définir au plus précis une grandeur de l'évènement pour informer le coordinateur, entre autres un commandant sur un navire, qui sera amené à gérer des actions.

### Brève description des figures

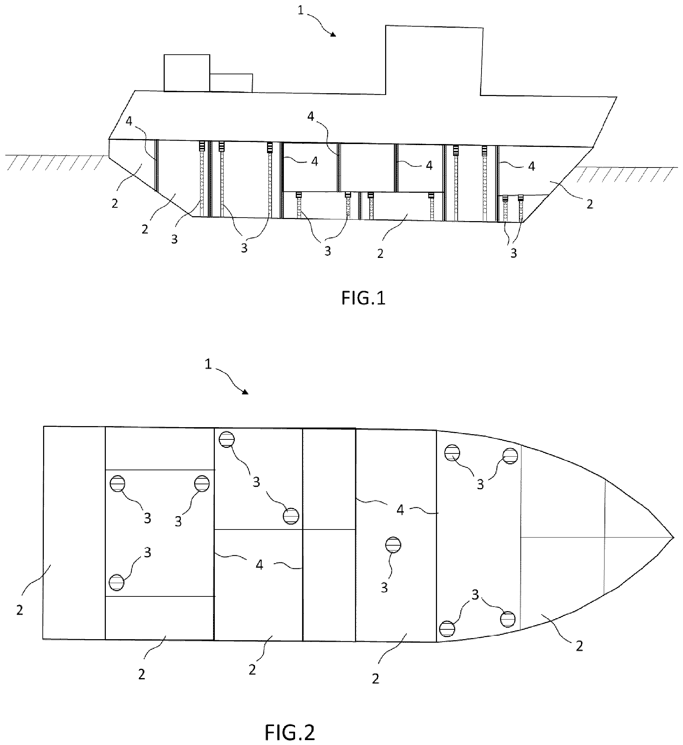

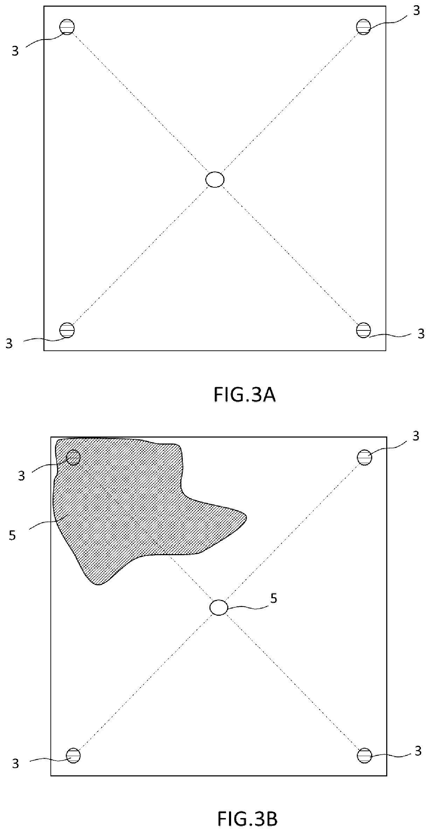

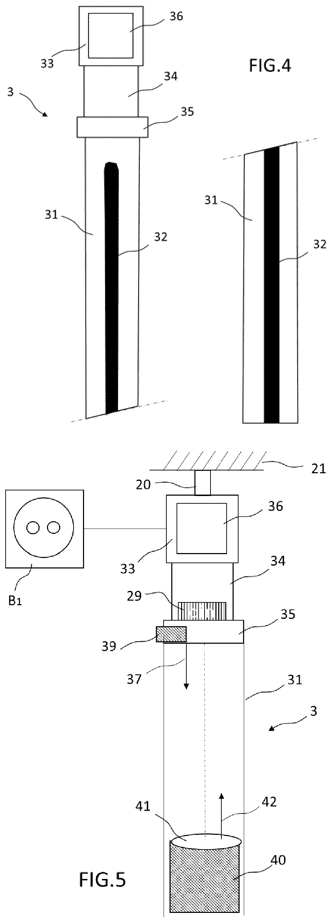

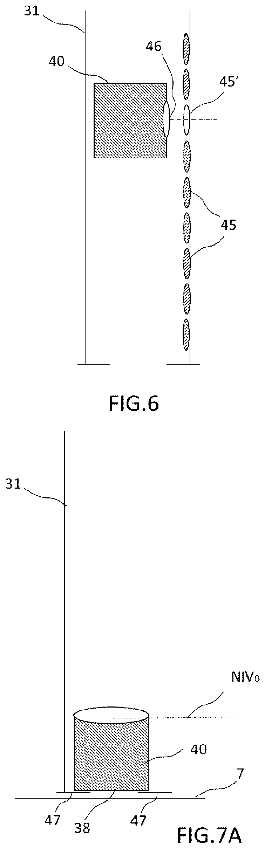

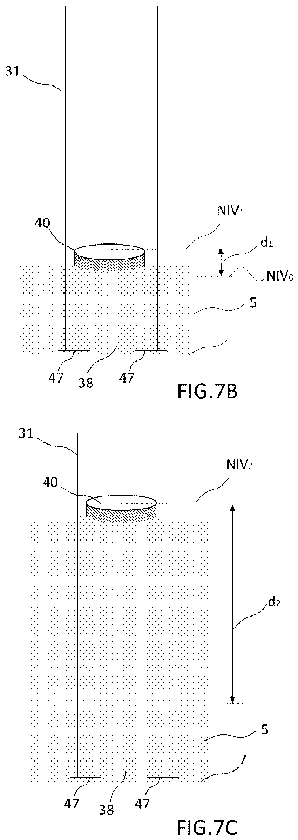

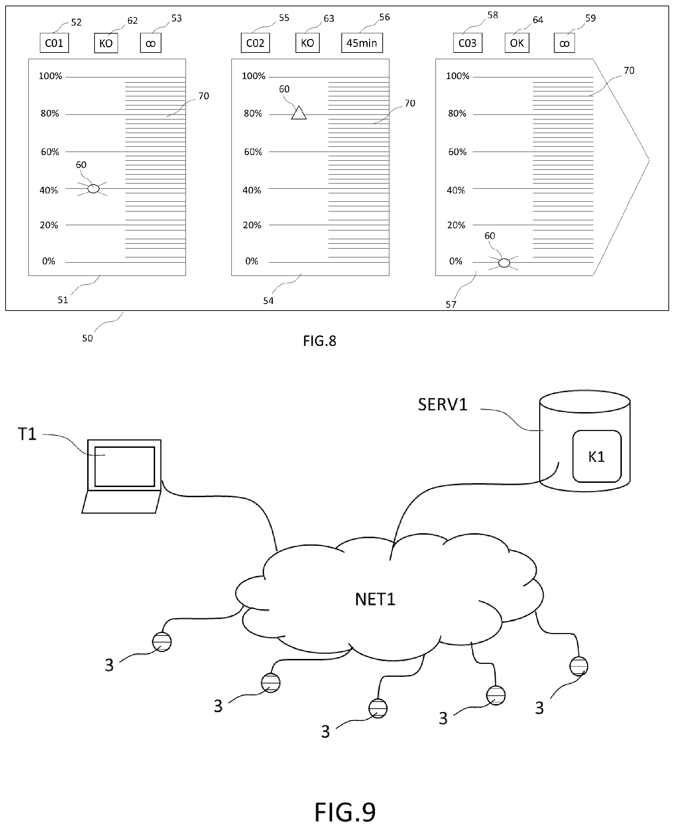

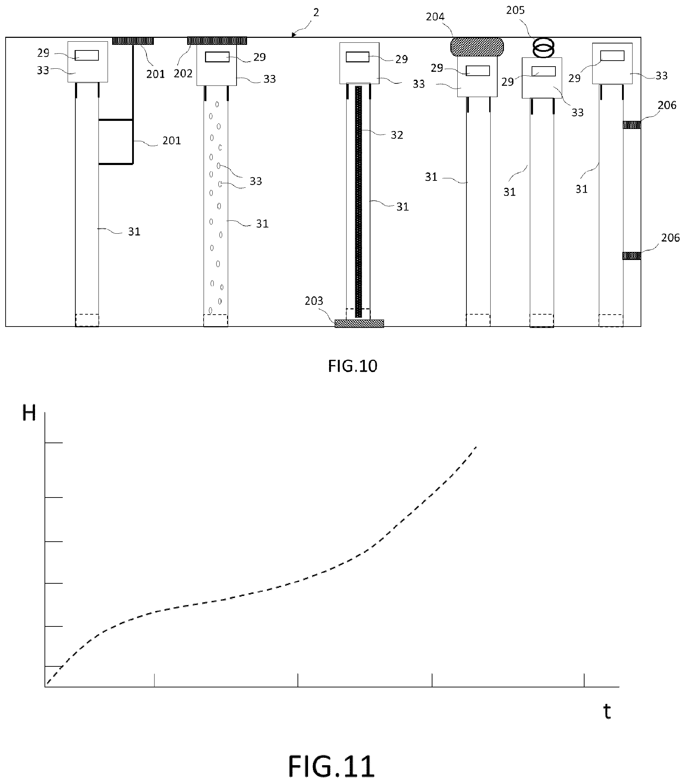

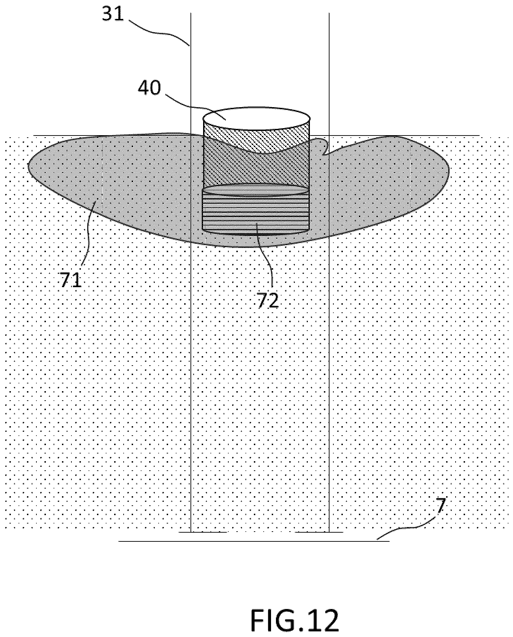

D'autres caractéristiques et avantages de l'invention ressortiront à la lecture de la description détaillée qui suit, en référence aux figures annexées, qui illustrent :
▪ Figure 1 : un exemple d'une représentation de navire en vue de côté au sein de laquelle sont représentés des compartiments et des dispositifs de détection de l'invention ;
▪ Figure 2 : un exemple d'une représentation de navire en vue de dessus au sein de laquelle sont représentés des compartiments et des dispositifs de détection de l'invention ;
▪ Figure 3A : un exemple d'un compartiment comportant quatre dispositifs de détection agencés aux quatre coins du compartiment ;
▪ Figure 3B : un exemple d'un compartiment comportant quatre dispositifs de détection agencés aux quatre coins du compartiment tel que celui de la figure 3A et au sein duquel une hauteur d'eau se répand depuis un des coins du compartiment
▪ Figure 4 : un exemple d'un dispositif de détection de l'invention comportant une fente le long du corps longitudinal tubulaire permettant de visualiser le flotteur ;
▪ Figure 5 : une représentation d'un exemple de réalisation d'un dispositif de l'invention comportant un émetteur laser permettant d'émettre un faisceau réfléchi sur le flotteur pour le calcul de la hauteur d'eau ;
▪ Figure 6 : un autre exemple de dispositif de détection de l'invention comportant un système de détection par électromagnétisme ;
▪ Figure 7A : exemple d'une représentation d'un dispositif de détection de l'invention comportant un flotteur dans une situation sans envahissement ;
▪ Figure 7B : un exemple d'une autre représentation d'un dispositif de détection de l'invention comportant un flotteur dans une situation où une hauteur d'eau commence à envahir un compartiment ;
▪ Figure 7C : un exemple d'une autre représentation d'un dispositif de détection de l'invention comportant un flotteur dans une situation où une hauteur d'eau envahit un compartiment ;
▪ Figure 8 : un exemple d'une interface graphique permettant de visualiser des indicateurs d'envahissement par compartiment ;
▪ Figure 9 : un exemple d'un système de détection de l'envahissement d'un navire comportant interface graphique permettant de visualiser des indicateurs d'envahissement par compartiment ;
▪ Figure 10 : différents exemples d'agencement et de fixations du dispositif de détection dans un compartiment,
▪ Figure 11 : un exemple d'une représentation de l'évolution de hauteur d'un envahissement au cours du temps dans un compartiment ;
▪ Figure 12 : un exemple d'un flotteur comportant une partie inférieure comportant un agent apte à modifier la transmission de la lumière dans un milieu dans lequel l'agent est localement dissout.

On appelle le « système de détection et de mesure d'un envahissement d'un engin flottant » de l'invention également un système de mesure et de traitement des données de l'envahissement. Ce dernier système comporte un dispositif de détection et de mesure.

On appelle le « dispositif de détection et de mesure » de l'invention également un « dispositif de détection ».

On nomme le détecteur un équipement comportant un capteur et un moyen de calcul permettant de transmettre une unité physique mesurée brute ou traitée à un équipement de collecte des données.

L'invention se rapporte à plusieurs méthodes pour quantifier une capacité quelconque. Les principaux moyens de mesure sont : La détection radar, la détection par ultrasons, la détection par pression du fluide, la détection de distance optique ou laser. La valeur qui est relevé, est ensuite transmise sous forme numérique à une unité de traitement.

La présente invention privilégie la mesure par détection laser. Ce moyen de mesure présente plusieurs avantages par rapport aux autres méthodes dans le cadre de la mesure de l'envahissement.

La technique de mesure laser, appelée détecteur optique de distance, utilise le principe de la réflexion (émission/réception) d'un rayon lumineux face à une cible. L'invention décrit un système de mesure laser qui traite l'évolution de hauteur de liquide et du temps lors d'un envahissement dans le compartiment d'un engin flottant. Cette valeur récoltée est transmise en continu à une unité de traitement des données afin de l'exploiter. L'interface homme/machine, dans un centre de commande, puise les informations dans cette unité de traitement et affiche les résultats sur différents modes qui peuvent être graphique, lecture, dynamique ou autre et permet de visualiser toutes les informations de l'évènement de l'envahissement en temps réel. La fiabilité de collecte de mesure en continu est donc très importante, la mesure laser permet d'obtenir cette performance de fiabilité.

La figure 1 représente un engin flottant 1 de type navire en vue de côté. L'invention peut être mise en œuvre sur tout type d'engin flottant notamment les navires comportant une carène disposant de compartiments 2.

Un engin flottant est décrit par une carène comportant au moins un compartiment ou une pluralité de compartiments. Un compartiment pour un engin flottant représente la distance et le volume compris entre deux cloisons étanches qui forme une tranche de la carène. Ainsi, un compartiment ou une pluralité de compartiments forment un engin flottant.

Dans le cadre de l'invention, selon un mode de réalisation, tout compartiment sera doté d'au moins un capteur de distance optique.

Lorsque la mesure est effectuée par un seul capteur dans un compartiment, son installation est par exemple réalisée dans le centre d'axe ou au plus près du centre d'axe dudit compartiment à partir d'une liaison fixe ou pendulaire.

Il est possible également de disposer deux, voire trois, de préférence quatre détecteurs de distance optique, notés DOD, ou une pluralité de DOD répartis équitablement dans le compartiment.

Selon un mode de réalisation préféré, un compartiment comporte quatre DOD. Cela offre un avantage de surveillance et de mesure renforcée par une amélioration du temps de détection mais aussi par le calcul moyen des hauteurs qui définit un centre d'axe virtuel dans le centre compartiment. Le choix de disposer d'un ou de plusieurs DOD et de leur position dans le compartiment peut être optimisé selon différents critères.

Par « navire », on entend tout type d'engin flottant composé d'une coque fermée par un pont et comportant au moins un compartiment. Généralement, le navire comprend une structure émergée comportant une cabine, une passerelle de navire, un aménagement et divers locaux et une carène constituée d'un compartiment ou plus souvent d'un assemblage de plusieurs compartiments qui est la partie immergée, également appelée « œuvres vives ». L'invention est décrite au regard d'un exemple d'un navire mais s'adresse à tout engin flottant.

Le pont principal délimite la partie supérieure du ou des compartiment(s) immergé(s) de l'engin flottant, c'est à partir du pont principal que sera délimitée la hauteur du franc bord qui est la distance entre le niveau de l'eau et le pont principal. Le volume de flottabilité d'un engin flottant repose sur la conception, le contrôle et l'exploitation de ses compartiments.

Ces compartiments sont de plusieurs natures :
▪ les compartiments techniques : salle des machines, local propulseur, local de pompe, etc. sont des locaux de travail où l'homme doit pouvoir circuler et œuvrer.
▪ les compartiments de capacité : ballast d'eau de mer, ballast d'eau douce, etc. Ils sont destinés à recevoir des volumes liquides : eau de mer, eau douce, combustible.
▪ les compartiments dits « étanches » sont les seuls compartiments prévus en réserve de flottabilité.

Les compartiments 2 comprennent des cloisons 4 qui peuvent être étanches ou non. Le procédé de l'invention permet de considérer des compartiments étanches ou des groupes de compartiments formant un unique compartiment étanche. L'invention se rapporte à un système de détection de l'envahissement d'un navire 1 par l'eau introduite dans au moins un compartiment 2 supposé étanche.

Le navire 1 de la figure 1 comprend une pluralité de compartiments 2 qui sont séparés entre eux ou avec d'autres espaces intérieurs ou extérieurs par des cloisons 4. Les compartiments 2 représentés sur la figure 1 sont tous situés au sein du volume formé par la carène. Chaque compartiment 2 est équipé d'au moins un dispositif de détection 3. Les dispositifs de détection 3 forment des éléments longitudinaux s'étendent du plafonnier d'un compartiment 2 quasiment jusqu'au sol ou sensiblement jusqu'au sol du compartiment 2 du navire 1.

Selon un mode de réalisation, les dispositifs de détection 3 comprennent une ouverture 38 à leur extrémité inférieure de sorte que l'eau pénétrant dans un compartiment 2 pénètre également dans la colonne formant le corps 31 du dispositif de détection 3. Les dispositifs de détection 3 sont préférentiellement agencés à proximité des cloisons de sorte qu'ils n'entravent pas la circulation au sein d'un compartiment 2.

Lorsque le corps tubulaire comprend une ouverture 38 sur le bas du tube et/ou une ou plusieurs perforation(s) 43 sur toute sa longueur et/ou d'une saillie longitudinale 32, cela permet de favoriser le fluide progresser dans le tube sur toute sa longueur.

La figure 2 représente un navire 1 en vue de dessus représentant une coupe du navire 1 au niveau de la carène, ladite carène ayant plusieurs compartiments 2. Chaque compartiment 2 est délimité par des cloisons 4 formant des parois étanches. La figure 2 représente des dispositifs de détection 3 agencés au sein des compartiments 2, préférentiellement aux coins de ces derniers. Un avantage d'un agencement de dispositifs de détection 3 aux coins ou à proximité d'une paroi est de disposer de plusieurs supports de fixation, tels qu'un plafonnier et une cloison. Enfin, un intérêt est d'éloigner suffisamment les dispositifs de détection 3 entre eux de sorte à obtenir différents points de mesure de référence. On comprend que si un dispositif de détection et de mesure 3 est situé au voisinage d'un autre dispositif de détection et de mesure 3, la mesure d'une hauteur d'eau ne pourra pas être représentative de l'ensemble de l'envahissement d'un compartiment et plus particulièrement au début de l'envahissement. Il est en effet possible qu'une présence d'eau située dans une zone donnée du compartiment 2 soit prisonnière du fait d'un obstacle ou d'une position du navire. Dans ce cas, il est possible que la détection de la hauteur d'eau soit erronée ou que la détection d'un seuil de hauteur soit retardée. Un problème est que les avaries matérielles sont plus difficiles à réparer ou à adresser avec la quantité d'eau augmentant dans le compartiment. Il y a donc un intérêt à agir le plus rapidement possible. Ainsi, il y a un avantage à agencer lesdits dispositifs de détection et de mesure 3 en des positions opposées dans un même compartiment 2 afin de mesurer une hauteur d'eau rapidement et détecter un envahissement le plus rapidement possible.

Ainsi, lorsque les compartiments 2 disposent de deux dispositifs de détection 3, on les agencera préférentiellement aux extrémités d'une diagonale du compartiment 2. Cet agencement permettra de surmonter les erreurs de mesures liées au tangage et/ou au roulis du navire 1. Lorsqu'un compartiment 2 comprend trois ou quatre dispositifs de détection 3, le système de l'invention comprendra préférentiellement un agencement de ces derniers aux voisinages des coins du compartiment 2.

Selon un autre exemple illustré à la figure 2, un compartiment ne comprend qu'un seul dispositif de détection 3. Dans ce cas, comme illustré, ce dispositif de détection 3 est agencé préférentiellement au centre du compartiment, à c'est-à-dire sensiblement à équidistance de chaque coin du compartiment.

La figure 3A représente un tel agencement d'un compartiment 2 comportant quatre dispositifs de détection 3 de l'invention.

La figure 3B représente un compartiment 2 en vue de dessus comportant quatre dispositifs de détection répartis aux quatre coins dudit compartiment. La figure 3B illustre un volume d'eau ou une hauteur d'eau 5 ayant pénétré dans le compartiment 2 par le biais d'une voie d'eau. Dans cet exemple, une quantité d'eau s'est aggloméré au niveau d'un coin du compartiment 2 sur quelques centimètres de hauteur. Ainsi, un dispositif de détection et de mesure 3 mesure une hauteur d'eau et les trois autres ne mesurent aucune présence d'eau.

Le système de l'invention permet de conclure sur l'un des scénarios suivants :
▪ un début de fuite et d'avarie au sein d'un compartiment est détecté dans un compartiment donné ;
▪ une hauteur d'eau mesurée permet de déduire un volume d'eau résiduel aggloméré à un endroit donné du compartiment ;
▪ une fausse détection du fait d'un matériel défectueux du dispositif de détection.

Ainsi, le système de l'invention permet un premier diagnostic d'une situation afin d'entreprendre une opération telle qu'un suivi de la mesure pour identifier l'évolution de l'envahissement d'un compartiment provenant d'une voie d'eau ou encore une intervention humaine pour vérifier l'état du compartiment 2.

Selon un mode de réalisation, un centre d'axe virtuel est généré de sorte à calculer un niveau d'envahissement dans ledit compartiment au centre d'axe virtuel. A cet effet, la hauteur d'envahissement peut être définie par la moyenne des hauteurs relevées par chaque détecteur surveillant ledit compartiment au niveau du centre d'axe virtuel.

La figure 4 illustre un dispositif de détection 3 de l'invention comportant un corps longitudinal creux 31 dans lequel évolue en translation un flotteur 40. La section du corps 31 est préférentiellement circulaire, ainsi le corps forme un cylindre creux. Toutefois, dans d'autres modes de réalisation, le corps creux 31 peut avoir une section carrée ou rectangulaire ou toute autre forme géométrique pour peu que le flotteur 40 épouse lui aussi une forme géométrique compatible de celle du corps 31 afin de permettre l'évolution d'un flotteur 40. Dans l'exemple de la figure 4, le corps creux 31 comprend une fente agencée sur une longueur prédéfinie du dispositif de détection 3. Un intérêt est de permettre une visualisation du flotteur 40 et éventuellement de dégager ce dernier en cas d'obturation du conduit. En outre, dans le cadre d'une maintenance, la fente permet d'observer la réflexion du faisceau laser sur la cible qui est le flotteur au repos. Cette observation permet de vérifier que le dispositif est opérationnel et calibré.

L'utilisation d'un corps tubulaire 31 permet de protéger la lecture et l'évolution du niveau de l'envahissement dans le compartiment.

L'ensemble de mesure comportant le corps tubulaire est préférentiellement disposé verticalement, fixer au plafond ou à partir du plafond.

Selon un mode de réalisation, un dispositif de détection 3 de l'invention comprend une tête 33 comportant un écran 36 permettant d'afficher un état du dispositif de détection 3. L'affichage peut permettre de signaler un fonctionnement ON/OFF, et/ou une alimentation électrique correcte ou incorrecte, et/ou un état d'erreur ou de normalité. Enfin, l'afficheur 36 peut indiquer un niveau de détection d'un niveau d'eau dans le compartiment 2 ou une durée au bout de laquelle le compartiment 2 sera entièrement envahi. Un intérêt d'un tel affichage est de permettre d'informer à un opérateur des données mesurées ou de fonctionnement du dispositif de détection 3 qui interviendrait sur ce dernier.

Selon un mode de réalisation, le dispositif de détection 3 comprend un émetteur 34 préférentiellement, un émetteur laser permettant d'émettre un faisceau laser 37 sur une surface réfléchissante du flotteur 40 afin de mesurer le signal réfléchi pour en déduire le temps d'aller-retour du faisceau 37 et 42 et d'en déduire une position du flotteur 40.

Dans ce cas, le flotteur libre de mouvement dans le corps tubulaire sert de cible de réflexion, il peut être équipé d'une face réfléchissante pour confirmer le signal émis lors de sa réflexion. C'est le mouvement du flotteur dans le tube qui active le process mesure de l'envahissement, le détecteur optique de distance transmet la valeur récoltée à une unité de calcul.

Une autre technique que l'émission laser peut être utilisée dans le cadre de l'invention, telle que les signaux acoustiques, les signaux ultrasons, un signal lumineux comportant une lumière structurée, un LIDAR ou encore des ondes dans l'ultra large bande, dénommée UWB.

Le dispositif de détection 3 de la figure 4 illustre également un collier de jonction 35 entre le bâti comportant l'électronique du dispositif de détection 3 dont l'émetteur 34 et le corps tubulaire 31.

La figure 4 représente le dispositif de détection 3 en deux parties avec une ligne de coupe. Toutefois, la figure 4 ne représente pas le dispositif de détection 3 à l'échelle. Le dispositif de détection 3 peut comporter différentes longueurs en fonction du calibrage du détecteur optique de distance qui sera retenu. Généralement, les hauteurs de compartiments dans un engin flottant se situe entre 0 et 10 mètres, mais peuvent pour certain cas aller au-delà.

Selon un exemple, pour certains navires, le dispositif de détection 3 peut par exemple être d'une longueur sensiblement comprise entre 160 cm et 320cm, préférentiellement entre 200 cm et 260 cm.

Selon un autre exemple de réalisation, le montage des équipements électroniques dont le capteur/récepteur 29 ou le détecteur, l'émetteur 34 est réalisé de sorte qu'ils soient agencés à l'extrémité supérieur du corps tubulaire 31 approchant le plafond du compartiment.

Selon un autre exemple, le montage des équipements électroniques dont le capteur/récepteur 29, l'émetteur 34 est réalisé de sorte à être fixé sur un corps tubulaire à l'extérieur dudit compartiment. Ce montage a pour avantage d'isoler le détecteur de la zone à surveiller ou mesurer tout en conservant une efficacité de détection.

Selon un exemple, ledit corps tubulaire 31 est fixé au bas du compartiment.

L'ensemble 3 comportant les équipements électroniques dont le capteur 29 et l'émetteur 34 et le corps tubulaire 31 présente l'avantage d'un faible encombrement. Il peut être disposé sur tout type d'engin flottant existant ou à construire. Il peut être fixé au plafond ou au plus près du plafond par la configuration de fixation simple. Selon un exemple de fixation, une fixation magnétique pour un support métallique peut être mise en œuvre. Le détecteur peut être disposé en dehors du compartiment et effectuer les mêmes mesures efficacement. L'ensemble détecteur/corps tubulaire offre également un avantage pour la ronde de surveillance, de maintenance et de mise en œuvre d'essai lors des tests. La précision de mesure continue fournit par la technique laser est connue, rapide et fiable.

La figure 5 illustre plus en détail le fonctionnement du moyen de mesure de l'évolution de la course du flotteur 40 à partir de l'émetteur laser 34. Le dispositif de détection 3 est dans cet exemple fixé à un plafonnier 21 au moyen d'une fixation 20. Selon un exemple, une fixation à chevilles ou une fixation à goujons ou encore par scellement chimique peut être réalisée. D'autres techniques de fixation sont compatibles de l'invention.

Selon un mode de réalisation, la fixation autorise un degré de liberté de sorte que le dispositif de détection 3 soit pendulaire. Un intérêt est de poursuivre une mesure fiable, quelle que soit la position du navire 1 qui pourrait être susceptible de se coucher en cas de dommage important.

Selon un mode de réalisation, le dispositif de détection 3 est alimenté au moyen d'une alimentation électrique du compartiment 2, ici représentée par un connecteur électrique B₁. Selon un autre mode de réalisation, une batterie rechargeable peut être insérée à un emplacement prévu à cet effet sur la partie supérieure du dispositif de détection 3. Selon un mode de réalisation, la batterie est par exemple placée entre la tête 33 et l'émetteur 34.

Selon un exemple, un émetteur laser 34 émet un faisceau laser 37 dans une direction dirigée vers le corps 31 de sorte que ce dernier se propage le long du corps creux 31 dans lequel est agencé le flotteur 40. Le flotteur 40 comprend avantageusement une surface réfléchissante 41 qui permet de réfléchir le faisceau 37 en un faisceau réfléchi 42. Cette surface réfléchissante forme une fonction réfléchissante du faisceau émis pour le réémettre, au moins une partie vers le récepteur agencé à l'extrémité du tube.

Selon un autre mode de réalisation, le flotteur 40 peut comporter un agent apte à modifier la transmission de la lumière lorsque l'agent est dissout localement dans un volume d'eau au voisinage directe du flotteur ou au niveau du flotteur.

Un tel agent est préférentiellement du type à libération prolongée pour être libéré par dissolution automatiquement au contact de l'eau au voisinage du flotteur ou au niveau du flotteur. Il est par exemple à l'état solide ou à l'état liquide.

De tels agents peuvent par exemple être des agents colorants, des agents opacifiants, ou des agents goniochromatiques.

Les agents « goniochromatiques » regroupent notamment les agents dont les surfaces présentent une apparence pigmentée, métallisée, nacrée ou encore interférentielle, ces surfaces, ont la capacité de changer d'apparence en fonction de l'angle d'observation

L'eau comportant un volume d'agent dissout localement dans un volume d'eau permet de former une fonction réfléchissante pour un faisceau lumineux, par exemple laser, incident et provenant de l'émetteur en direction de ce volume d'eau.

La dissolution de l'agent permet de former un volume d'eau localement coloré ou opacifiée. Ce volume d'eau agit alors comme un réflecteur d'un faisceau émis par l'émetteur agencé à l'extrémité du tube. Ainsi, le flotteur 40, dans ce mode de réalisation, comprend une fonction lui permettant de créer un volume d'eau réfléchissant grâce à l'agent qui se dissout au contact de l'eau.

Ce dernier peut être utilisé conjointement à un élément réfléchissant telle que la surface 41 ou en substitution de cette surface réfléchissance 41.

Le temps d'A/R du trajet effectué par le faisceau permet directement d'obtenir la position du flotteur 40 du fait de la connaissance de la vitesse de propagation du faisceau, notamment ici la vitesse de la lumière. Ainsi, la position du flotteur 40 peut être mesurée à plusieurs instants afin de déduire l'évolution de la hauteur du flotteur 40. Un avantage est de pouvoir calculer et prédire la durée au bout duquel un envahissement du compartiment 2 sera totalement atteint.

Selon un mode de réalisation un récepteur 29 permet la mesure du faisceau retour 42. Ce dernier récepteur 29 est préférentiellement agencé sensiblement à la même position sur l'axe longitudinal du dispositif de détection 3 que l'émetteur 34. Selon un mode de réalisation, un étalonnage permet de configurer le dispositif de détection 3 afin d'obtenir des mesures précises de la position du flotteur 40. Cet étalonnage peut permettre de prendre en considération la hauteur à laquelle l'extrémité inférieure du dispositif de détection 3 est située au-dessus du sol du compartiment 2, la hauteur à laquelle est relié le dispositif de fixation 3, la hauteur du flotteur 40, la différence de position entre l'émetteur 34 et le récepteur et/ou capteur 29. Cet étalonnage permet de générer une hauteur fiable de la hauteur d'eau dans le compartiment 2 à partir de la mesure de la position du flotteur 40 dans le corps creux 31.

Selon un mode de réalisation, afin d'économiser la batterie ou l'énergie consommée d'une manière générale, l'émetteur 34 peut être configuré pour émettre un signal toutes les minutes ou toutes les deux, trois, quatre ou cinq minutes. Lorsqu'une détection d'un mouvement du flotteur 40 est détectée, la fréquence d'émission des faisceaux est augmentée de sorte que le suivi de l'évolution du niveau d'envahissement peut être plus précis.

Selon un mode de réalisation, les émetteurs 34 de chaque dispositif de détection 3 peuvent être synchronisés de manière à piloter les émetteurs lasers avec des émissions décalées. Un intérêt est de dépenser peu d'énergie tout en émettant fréquemment. Si on considère que les émetteurs tirent un faisceau toutes les 4 minutes par exemple et s'ils sont décalés de 1 min deux à deux, cela permet d'obtenir une configuration permettant une économie d'énergie tout en assurant un contrôle fréquent de la position d'au moins un flotteur d'un des quatre dispositifs de détection. Cette configuration permet de ne pas laisser une période trop longue sans vérification du niveau du flotteur 40.

Selon un mode de réalisation, le flotteur comprend un agent solide permettant de colorer ou d'opacifier localement l'eau lors d'un envahissement d'un compartiment. Selon un exemple, l'agent peut être de type colorant à libération prolongée, c'est-à-dire qu'il se dissout au contact de l'eau avec une certaine vitesse permettant de prolonger l'effet de dissolution de ce dernier. Un avantage est de permettre de faire durer le phénomène de dissolution pour augmenter la probabilité de détection de la présence d'eau et de mesure de la hauteur d'eau dans le compartiment lié au déplacement du flotteur.

Selon un exemple, l'agent apte à modifier localement la transmission de la lumière dans le milieu dans lequel il est dissout est un colorant à l'état solide.

Selon un mode de réalisation, l'agent apte à modifier localement la transmission de la lumière dans le milieu dans lequel il est dissout est préférentiellement agencé dans la partie du flotteur destinée à être immergée lors de la flottaison de ce dernier.

Selon un exemple, il est agencé dans une structure de rétention ouverte par exemple un bâti comportant des ouvertures. Le bâti peut être en plastique, aluminium, polystyrène ou tout autre matériau adéquate, c'est-à-dire favorisant la flottaison et permettant d'ajourer certaines parties pour laisser le colorant au contact de l'eau.

Un intérêt de l'agent apte à modifier localement la transmission de la lumière dans le milieu dans lequel il est dissout est d'opacifier le fluide, le plus souvent l'eau de mer, pour favoriser la détection du niveau du fluide par l'analyse de la réflexion du faisceau laser sur le capteur. Le faisceau laser, à défaut d'être réfléchi par le flotteur si ce dernier est par exemple bloqué ou coincé dans le tube, sera réfléchi par le niveau d'eau opacifié par l'agent. Un avantage est de faire fonctionner le suivi du niveau d'eau quand bien même le flotteur n'agit plus comme un élément réfléchissant.

La figure 12 représente un mode de réalisation illustrant un flotteur comportant une partie inférieure 72 formée d'un agent colorant à libération prolongée contenu dans un réceptacle cylindrique prolongeant la forme du flotteur 40. Toute autre forme peut être utilisée. L'agent formant le colorant peut être par exemple violet, rouge, noire, gris, orangé, ou toute autre couleur permettant d'opacifier localement l'eau pour agir comme un réflecteur de l'onde émise. L'eau ainsi colorée ou opacifiée 71 est représentée sur la figure 12.

Le dispositif de détection 3 comprend en outre une interface de communication 39 qui peut être filaire ou sans-fil. Cette interface de communication permet de transmettre des données, notamment des données mesurées ou calculées par le calculateur d'une carte électronique associée avec l'émetteur 34 et le récepteur laser 29. Ainsi, le dispositif de détection 3 permet de retourner les valeurs calculées à une fréquence donnée vers une unité de calcul distante. Par exemple, cette unité distante peut être un serveur dans une salle du navire 1 dédiée aux matériels informatiques. Cet équipement peut également se situer dans la cabine.

L'information de progression du flotteur dans le corps tubulaire 31 lors d'un envahissement est transmise à une unité de calcul. Depuis un centre de commande, lors d'une présence de liquide, la première action de l'interface utilisateur est de diffuser une alerte visuelle et sonore.

Un intérêt est de recueillir les données de surveillance des compartiments 2 directement au sein d'un terminal utilisateur ou d'une console d'exploitation des données du navire 1. Cet équipement est préférentiellement situé dans la cabine. A cet effet, l'interface de communication peut être une interface Wifi, GPRS, 3G, 4G, Bluetooth, LORA, ou tout autre protocole d'échange de données permettant de transmettre des données. La liaison sans fil peut être doublée d'une liaison filaire dans le cas où l'on souhaiterait rendre plus robuste le système de l'invention. Selon un mode de réalisation, une liaison Ethernet peut être configurée pour émettre les données mesurées et/ou calculées par le calculateur associé à l'émetteur/récepteur du dispositif de détection 3. Selon un mode de réalisation, une unique liaison filaire est mise en œuvre.

Selon un mode de réalisation, un identifiant du dispositif de détection 3 est associé et envoyé avec les données collectées par le récepteur et/ou capteur 34 et possiblement utilisées pour produire un indicateur. L'identifiant permet à la console d'exploitation d'administrer les différents dispositifs de détection 3 agencés au sein du navire 1. Selon un mode de réalisation, une association entre un identifiant de compartiment 2 et un identifiant de dispositif de détection 3 est réalisée. Cette association d'identifiants est enregistrée dans une mémoire par exemple d'un serveur distant SERV₁ qui est situé dans le navire représenté à la figure 9.

La figure 6 représente un autre mode de réalisation de détection de la position d'un flotteur 40. Dans ce mode de réalisation, le corps longitudinal 31 comprend le long de sa paroi des éléments électromagnétiques 45 tels que des aimants. Ces éléments électromagnétiques 45 sont agencés de manière à former des marqueurs de la distance linéaire parcourue par le flotteur 40 lors de son déplacement. Selon ce mode de réalisation, le flotteur 40 est muni d'un élément ferromagnétique 46 fixé sur une partie latérale dudit flotteur 40 de manière à ce qu'il soit positionné en vis-à-vis des éléments électromagnétiques 45. Ainsi, lorsque l'élément ferromagnétique 46 est agencé en vis-à-vis d'un élément électromagnétique 45, le champ magnétique produit un courant d'induction qui peut être mesuré. Si les éléments sont montés en série ou en parallèle, il est possible d'identifier quel élément 45 est actif, c'est-à-dire en vis-à-vis du flotteur 40. L'élément actif est noté 45' sur la figure 6.

Selon un exemple, l'élément ferromagnétique 46 peut être un élément annulaire fixé sur le flotteur 40 lorsqu'il est de forme sensiblement cylindrique de sorte qu'une rotation du flotteur 40 autour d'un axe longitudinal parallèle au corps creux 31 ne modifie pas la configuration de détection. En effet, dans ce cas une portion de cet élément 46 sera toujours en vis-à-vis d'un élément 45 quelle que soit son orientation autour de l'axe longitudinal.

Ainsi, lorsque le flotteur 40 monte le long du corps longitudinal 31 en direction du plafonnier du compartiment 2, l'élément électromagnétique 45 en regard du flotteur 40 s'active et un courant est produit ce qui génère une information quantifiable et mesurable. Le calculateur du dispositif de détection 3 est alors en mesure de générer une information vers l'interface de communication à destination d'un équipement distant de sorte que cette information puisse être analysée en temps réel par un opérateur ayant une console d'exploitation T₁ permettant d'administrer les différents dispositifs de détection 3 et contrôler le niveau d'envahissement dans chaque compartiment 2.

D'autres systèmes encore peuvent être utilisés afin de mesurer la hauteur d'eau dans un compartiment 2 notamment en mesurant la hauteur d'un flotteur 40. La solution d'un dispositif laser permet néanmoins d'obtenir un très bon compromis entre la fiabilité de la mesure, la consommation électrique peu énergivore et la bonne intégration notamment grâce à une unique face réfléchissante sur un flotteur 40.

La figure 7A représente un exemple de configuration d'un dispositif de détection 3 agencé dans le compartiment 2 sans présence d'eau. Dans ce cas, le flotteur 40 est à son niveau le plus bas dans le corps creux 31, c'est-à-dire au plus proche du sol du compartiment 2. Un niveau de référence NIV₀ est représenté et correspond à la situation dans laquelle aucun déplacement du flotteur 40 au sein du corps creux 31 n'a été effectué. Dans l'exemple de la figure 7A, le flotteur 40 est retenu par un deux rebords circonférentiels de retenu 47. Ces rebords de retenue 47 permettent de maintenir le flotteur 40 au sein du corps creux 31 tout en laissant l'eau pénétrer au sein du corps creux lors d'un envahissement du compartiment 2.

Le rebord de retenue 47 peut être circonférentiel et agencé sur l'ensemble de l'extrémité du corps creux 31. Selon un autre cas, le rebord de retenue 47 peut être un ergot simple permettant d'obstruer le passage du flotteur 40 et s'étendant vers l'intérieur de l'ouverture du corps creux 31. Selon un autre exemple, le rebord de retenue 47 peut être une tige ou une barre formant un diamètre du corps creux 31. Dans ce dernier cas, le rebord de retenue 47 se présente plutôt comme un moyen de retenue.

La figure 7B représente une situation dans laquelle un volume d'eau a pénétré dans le compartiment 2. Le dispositif de détection 3 détecte un déplacement du flotteur 40. La hauteur du flotteur 40 est ici représentée par un niveau noté NIV₁. Dans le cas des figures 7A, 7B, 7C c'est la surface supérieure du flotteur 40 qui est considérée comme référence. Toutefois, selon un autre mode de réalisation, une autre référence peut être considérée, par exemple le milieu de la hauteur du flotteur 40 ou la surface inférieure du flotteur 40.

La course du flotteur 40 correspond à la différence de niveaux mesurée, ici représentée par une distance d₁, avec d₁ = NIV₁ - NIV₀.

La figure 7C représente un cas dans lequel un niveau d'envahissement du compartiment 2 a augmenté par rapport à la situation de la figure 7B. Un nouveau niveau, noté NIV₂, est atteint par le flotteur 40. La hauteur d'eau mesurée est notée d₂ et correspond à la différence entre le niveau NIV₂ et le niveau de référence NIV₀. On a d₂ = NIV₂ - NIV₀.

On obtient alors la dérivée di/dt = Δ(NIVᵢ-NIV₀)/dt. Ainsi avec des mesures réalisées avec des fréquences élevées, il est possible de déduire la dynamique de d'envahissement d'un compartiment 2.

La figure 10 représente différents exemples de dispositifs de détection 3 de l'invention représentés dans un même compartiment 2. Ces différents exemples permettent d'illustrer différentes modes de réalisation d'agencement de ces dispositifs de détection 3 au sein d'un compartiment.

Le premier exemple illustre un mode de fixation du dispositif de détection 3 par une fixation 201 solidarisant l'élément tubulaire 31 avec une tige de maintien s'étendant selon un axe parallèle au tube 31 et elle-même fixée au plafond du compartiment. Un intérêt de cette solution est de s'affranchir de la hauteur de la colonne du dispositif de détection 3 contraignant parfois une adaptation de la fixation de la tête 33 selon la hauteur à laquelle elle se trouve vis-à-vis du plafond du compartiment 2. Un avantage de cette solution est d'être compatible de toute hauteur de compartiment 2.

Un second exemple illustre une attache 202 du dispositif de fixation 3 au niveau de la tête 33 au plafonnier. Une fixation 202 est réalisée par exemple au moyen d'une charnière et un système de {vis - écrous} et permet de fixer le dispositif au plafond du compartiment 2. Un avantage de cette solution est son faible encombrement. Toute autre fixation qu'une charnière est compatible de l'invention. Le second exemple permet de représenter un exemple de dispositif de détection 3 comportant des ouvertures latérales de type perforations 33.

Un troisième exemple illustre une attache 203 du dispositif de fixation 3 au niveau du sol du compartiment 2. Une fixation 203 est réalisée par exemple au moyen d'une charnière et d'un système de {vis - écrous} et permet de fixer le dispositif de détection 3 au sol du compartiment 2. Un avantage de cette solution est sa facilité d'installation. Toute autre fixation qu'une charnière est compatible de l'invention. Le troisième exemple permet de représenter un exemple de dispositif de détection 3 comportant une fente latérale 32.

Un quatrième exemple illustre une attache 204 du dispositif de fixation 3 au niveau du plafond du compartiment 2. Une fixation 204 est réalisée par exemple au moyen d'une pièce élastique fixée au plafond d'un compartiment 2. Une telle pièce peut être par exemple un "Silent bloc ». Cette pièce est une pièce élastique qui permet d'absorber les bruits et les vibrations d'un élément possiblement en mouvement. Un avantage de cette solution est de permettre d'amortir les mouvements éventuels de la colonne 31. Toute autre fixation comportant un élément élastique ou se déformant peut être utilisée dans le cadre de l'invention.

Un cinquième exemple illustre une attache 205 du dispositif de fixation 3 au niveau du plafond du compartiment 2. Une fixation 205 est réalisée par exemple au moyen d'une pièce réalisant une articulation mécanique par exemple autorisant un degré de liberté. Cette dernière fixation est fixée au plafond d'un compartiment 2. Cette fixation 205 permet de favoriser la liberté de mouvement de l'élément tubulaire 31. Un avantage de cette solution est de permettre une mesure d'une hauteur d'eau dans le compartiment indépendamment des inclinaisons de l'engin flottant sur la ligne d'eau. Un autre avantage est de ne pas contraindre le dispositif de détection 3 de l'invention. Toute autre fixation permettant un ou plusieurs degrés de liberté peut être utilisée dans le cadre de l'invention.

Selon un exemple une fixation pendulaire de l'ensemble détecteur/corps tubulaire peut être mécanique par exemple une rotule ou un cardan mais aussi élastique par exemple un silentbloc en caoutchouc ou en élastomère permettant à l'ensemble du dispositif de mesure une liberté de mouvement.

Le cinquième exemple illustre un mode de fixation du dispositif de détection 3 par une fixation 206 solidarisant l'élément tubulaire 31 avec une cloison latérale du compartiment 2. La fixation 206 permet de fixer l'élément tubulaire 31 à une cloison par exemple grâce à au moins une tige de maintien s'étendant par exemple selon un axe perpendiculaire au tube 31. Un intérêt de cette solution est de s'affranchir de la hauteur de la colonne du dispositif de détection 3 contraignant parfois une adaptation de la fixation de la tête 33 selon la hauteur à laquelle elle se trouve vis-à-vis du plafond du compartiment 2. Un avantage de cette solution est d'être compatible de toute hauteur de compartiment 2.

La figure 8 représente un mode de réalisation d'une interface utilisateur représentant trois jauges 51, 54, 57 mesurant le niveau d'eau dans trois compartiments 2 respectivement associés auxdites jauges. Afin d'être différenciés pour l'opérateur, les compartiments 2 sont nommés avec des appellations dédiées, ici nommées C01, C02 et C03. Toute autre appellation est envisageable selon différentes modes de réalisation, notamment afin de géoréférencée les compartiments dans le navire 1. Selon un exemple de réalisation, une vue de l'ensemble des compartiments 2 du navire 1 est générée de sorte que l'opérateur ait l'intégralité de la connaissance de la situation du navire 1.

Selon un exemple, les jauges représentées ont avantageusement une géométrie propre ou fidèle à la surface ou au volume du compartiment 2 qui est associé à la jauge. Cette association permet à l'opérateur d'apprécier la rapidité de l'envahissement au regard de la hauteur d'eau mesurée dans le compartiment 2 concerné par l'avarie.

Chaque jauge représentée au sein de l'interface de la figure 8 illustre une échelle en pourcentage d'envahissement total du compartiment 2. Ainsi, on relève dans l'exemple de la figure 8 que le compartiment C01 a un niveau d'envahissement de 40%, le compartiment C02 a un niveau d'envahissement de 60% et le compartiment C03 a un niveau d'envahissement de 0%. Pour cela, un indicateur visuel 60 est représenté pour chaque jauge, chaque jauge étant associée à un compartiment 2. Chaque jauge comprend une graduation 70 permettant d'apprécier la position de l'indicateur 60 et la granularité de cette position et de son évolution. Un ensemble d'indicateurs temporels 53, 56, 59 sont représentés sur la figure 8. Chaque indicateur temporel indique le temps restant estimé avant l'envahissement complet du compartiment 2. Cette estimation est réalisée à partir d'une pluralité de mesures faites en temps réel et permettant de calculer l'évolution de l'envahissement, dont notamment la vitesse de l'envahissement du compartiment 2 et l'accélération le cas échéant de l'envahissement du compartiment 2. La figure 8 représente trois cas de figure différents.

Le premier compartiment représenté C01 a été envahi à 40% de son volume total déduit de la mesure de la hauteur d'eau. Toutefois, l'indicateur temporel 53 représente le symbole « infini » qui signifie que le temps au bout duquel l'envahissement total du compartiment C01 s'achèvera ne peut être calculé. Cela indique donc que la voie d'eau est stabilisée et que le compartiment C01 ne risque plus l'envahissement total. La stabilisation de la voie d'eau peut être liée par exemple à un colmatage de la voie d'eau ou à un pompage de l'eau dans le compartiment. Un indicateur d'alerte 62 indique une situation de ce compartiment avec un risque constaté : « KO », du fait de la détection d'un niveau d'eau au sein d'un compartiment du navire. Un moyen intermédiaire peut par exemple illustrer que la situation est stable.

Le second compartiment représenté C02 a un niveau d'envahissement de 60% du total du volume du compartiment déduit de la mesure de la hauteur d'eau. L'indicateur temporel 56 indique une durée de 45 min au bout duquel le compartiment 2 sera entièrement envahi. Cette durée peut être calculée en dérivant les mesures et en prédisant sur la base d'une courbe prédictive l'instant au bout duquel le compartiment C02 sera totalement envahi. Les mesures sont préférentiellement réalisées sur une pluralité de dispositifs de détection 3 du compartiment C02. Un indicateur d'alerte 63 indique une situation de ce compartiment C02 avec un risque constaté : « KO », du fait de la détection d'un niveau d'eau. Selon un mode de réalisation, dès qu'un dispositif de détection 3 détecte un mouvement du flotteur 40, il passe l'état de l'indicateur d'alerte en situation de risque et émet possiblement une alerte visuelle et/ou sonore. Un message peut être émis automatiquement sur un serveur de messagerie auprès d'une pluralité de correspondants. Une configuration du système de l'invention permet d'associer un niveau d'alerte calculé en fonction du pourcentage d'envahissement avec des adresses électroniques ou des numéros de téléphone de sorte qu'un message soit automatiquement émis.

Le troisième compartiment représenté C03 n'a pas été envahi. Aucune voie d'eau ne semble menacer ce compartiment. L'indicateur temporel 59 indique également un envahissement au bout d'un temps infini. Un indicateur d'alerte 64 indique une situation de ce compartiment sans risque : « OK ».

La figure 11 représente un graphique permettant de tracer la courbe d'envahissement en fonction du temps. La courbe permet de représenter la hauteur d'envahissement dans un compartiment en fonction du temps. Une telle courbe peut être caractéristique d'un type d'avarie ou d'une localisation de l'avarie. Un intérêt de cette représentation est de permettre d'anticiper une évolution caractéristique en temps réel ou encore d'analyser à postériori l'évolution des évènements caractérisant l'évolution de l'envahissement.

Selon un exemple, l'interface utilisateur génère une représentation des compartiments d'un engin flottant. Une information d'envahissement est générée pour chaque compartiment. Cette information est affichée en temps réel et est donc animé au fil des évènements mesurés soit par un pourcentage ou un volume ou une hauteur représentée sur la représentation du compartiment. Selon un exemple, l'état dynamique de progression de l'envahissement est représenté par une montée d'eau dans le compartiment accompagné d'un curseur actif. Pour un autre compartiment, l'invention permet de représenter un autre état, par exemple en affichant une information permettant de constater le même comportement mais en régression de l'envahissement. Pour d'autres compartiments, il peut apparaitre un sigle de stabilité, démontrant qu'il ne se passe rien. L'interface graphique permet d'afficher dynamiquement des états indépendants de chaque compartiment selon les mesures réalisées.

Selon un exemple, une valeur de temps de l'envahissement totale de chaque compartiment apparait sur le graphique. Cette valeur déterminera la grandeur et la dynamique de l'envahissement, l'information du temps permet de conduire et de gérer des actions très importantes dans ces situations. Le système de mesure présente l'avantage de refléter en temps réel les résultats pour chaque action menée, et permet ainsi de ne pas dégrader une situation ou encore de garantir une action.

Selon un exemple, sur une page dédiée pour chaque compartiment, une série d'information individuelle s'affiche avec entre autres : la dynamique de l'envahissement en mm/sec, la valeur de temps maximum et minimum d'envahissement ou de régression de l'envahissement, la hauteur d'eau présente dans le compartiment.

Selon un exemple, un historique de l'évènement pour chaque compartiment s'affiche par une courbe de l'envahissement en temps réel. Cette courbe permet de visualiser la dynamique de l'évènement pendant une durée, afin d'interpréter au mieux l'envahissement pour projeter, conduire des actions et des décisions.

L'invention s'adapte à tout type d'architecture d'engins flottants. Notamment, les engins flottants n'ayant pas généralement des compartiments de mêmes volumes, de mêmes formes, de mêmes fonctions et de mêmes encombrement, l'invention s'adapte à l'hétérogénéité des architectures. En effet, le profil de la courbe peut présenter une progression, une stagnation ou régression qui dépend du réel envahissement du compartiment. Le système de mesure de l'invention apporte par la projection de la courbe de multiples informations qui ne sont pas appréhendée par les dispositifs actuels.

Selon un exemple, l'enregistrement et le stockage de l'envahissement apporte une meilleure compréhension pour un individu de la dynamique d'envahissement. Un intérêt est de comprendre et de modéliser par des logiciels l'évènement dans son ensemble, du départ de l'envahissement en passant par le comportement de l'engin flottant mais également par la gestion des actions.

Selon un exemple, le stockage des données est réalisé sur plusieurs supports par exemple sur une clé USB, un enregistreur de données de voyage noté VDR et désignant dans la terminologie anglo-saxonne « Voyage Data Recorder », un type de boite noire sur l'engin flottant, ou encore un serveur dédié à terre.

Selon un mode de réalisation, le procédé de l'invention permet de calculer un indicateur permettant d'apprécier si le facteur de cloisonnement est atteint. Le facteur de cloisonnement définit le nombre de compartiments envahit à ne pas dépasser après une avarie, il est généralement de 1 ou 2 compartiment(s), mais peut varier selon l'engin flottant considéré.

Selon un mode de réalisation, le système de mesure et de traitement des données de l'invention génère des données indiquant les conditions prédictives à l'atteinte à la stabilité critique après avarie.

Dans ce cas, le système de l'invention intègre la connaissance du facteur de cloisonnement de l'engin flottant en nombre de compartiments envahis. Ainsi par la combinaison de la mesure d'envahissement en temps réel et l'intégration du facteur de cloisonnement, le système hiérarchise l'envahissement de chaque compartiment et définit le temps d'atteinte à la stabilité critique.

Par ces informations, le système de mesure et de traitement de données de l'invention génère un indicateur temporel restituant le temps restant avant l'atteinte au seuil de stabilité critique, ainsi le responsable de l'engin flottant bénéficie d'un d'outil d'aide à la décision afin de préparer ou pas une évacuation.

La figure 9 représente un mode de réalisation du système de l'invention comportant un ensemble de dispositifs de détection 3, chacun étant connecté à un serveur distant SERV₁ par exemple via un réseau local NET₁. Chaque dispositif de détection 3 émet, le cas échéant, une donnée propre à la mesure du déplacement du flotteur 40 intégré dans ledit dispositif de détection 3. Les données sont reçues par le serveur SERV₁ et stockées dans une mémoire. Un calculateur K₁ permet d'agréger les mesures et de calculer les évolutions de déplacement du flotteur 40. Ces évolutions sont comparées à des caractéristiques du compartiment 2, telles que sa hauteur. Selon d'autres exemples, d'autres caractéristiques du compartiment 2 peuvent être utilisées ou affichées pour l'opérateur sur l'interface. On comprend qu'un compartiment 2 ayant une hauteur basse pour une surface équivalente d'un compartiment ayant une hauteur plus importante sera envahi plus rapidement pour une voie d'eau équivalente. Toutefois, un compartiment avec une hauteur basse et grande surface pourra être envahi à 100% après un compartiment ayant une plus grande hauteur, mais avec une surface plus petite. Le suivi de l'indicateur s'affranchit donc des dimensions de surface du compartiment 2, car il est calculé sur l'évolution de la hauteur du flotteur 40 et peut donc se rapporter directement à la hauteur du compartiment 2.

Les données brutes émises par chaque dispositif de détection 3 ou les données calculées le calculateur K₁ du serveur SERV₁ sont alors envoyées à une console utilisateur T₁, également appelé terminal utilisateur. Ce dernier peut être un ordinateur de contrôleur dans la cabine, mais également une tablette numérique ou un téléphone intelligent.

Selon un autre mode de réalisation, le serveur SERV₁ est directement l'ordinateur exploité par l'opérateur, c'est-à-dire le terminal T₁.

L'invention trouve un avantage dans la capacité de détecter et mesurer une hauteur d'eau dans un compartiment d'un navire. L'invention offre la possibilité de visualiser en temps réel le temps correspondant à un « reste à bord » et permet d'organiser une évacuation dans les meilleures conditions. Ainsi lorsqu'un opérateur connait le temps restant avant un envahissement total d'un compartiment, il est en mesure de prédire un risque de naufrage ou d'engager une manœuvre de sauvetage. La durée restante avant l'envahissement complet d'un compartiment est une donnée cruciale pour prévenir des actions à entreprendre. L'invention permet un suivi de cette durée. La mesure est fiable et robuste du fait des différents dispositifs de détection 3 présents dans un compartiment 2.

## Revendications

1. Système de détection et de mesure d'un envahissement d'un engin flottant (1) par l'eau, ledit système comprenant :
▪ au moins deux dispositifs de détection d'une hauteur d'eau (3) agencés dans différentes zones d'un premier compartiment (2) d'un engin flottant (1), chaque dispositif de détection (3) comportant :
▪ un corps longitudinal (31) agencé verticalement, ledit corps longitudinal (31) comportant une ouverture inférieure (38) permettant à un volume d'eau entrant de faire évoluer un flotteur (40) le long dudit corps longitudinal (31) ;
▪ un flotteur (40) maintenu libre d'évoluer dans le corps longitudinal (31), ledit flotteur (40) comportant un moyen pour réfléchir un faisceau lumineux ;
▪ un émetteur optique (34) agencé à l'extrémité supérieure dudit corps longitudinal (31) et générant un faisceau optique (37) en direction dudit flotteur (40) ;
▪ un capteur (29) mesurant et détectant le faisceau réfléchi (42) ;
▪ une horloge permettant de mesurer le temps d'aller-retour du faisceau (37, 42) ;
▪ un moyen de communication (39) filaire ou sans fil pour transmettre les données mesurées à une unité de calcul (K₁) ;
▪ une source d'énergie électrique (B₁) pour alimenter au moins l'émetteur optique (34);
▪ un équipement de supervision (SERV₁) distant comportant :
▪ une interface de communication pour recevoir les données émises par chaque dispositif de détection (3) ;
▪ une mémoire pour enregistrer les données reçues ;
▪ un calculateur (K₁) pour calculer l'évolution de la hauteur d'eau en temps réel à partir de l'ensemble des mesures de chaque dispositif (3) et estimer le temps d'atteinte d'une hauteur d'eau donnée ;
▪ une alarme pour émettre une première alerte en cas de détection d'une hauteur d'eau prédéfinie atteinte ;
▪ une interface utilisateur pour générer une représentation du niveau d'envahissement.

2. Système selon la revendication 1, **caractérisé en ce que** l'émetteur optique est un émetteur laser.

3. Système selon l'une quelconque des revendications précédentes, **caractérisé en ce qu'**au moins un dispositif de détection (3) comprend une ouverture (32) formant une fente et permettant de visualiser la course du flotteur (40) à l'intérieur du corps longitudinal (31).

4. Système selon l'une quelconque des revendications 1 à 3, **caractérisé en ce que** quatre dispositifs de détection (3) sont agencés aux quatre coins d'un premier compartiment (2).

5. Système selon l'une quelconque des revendications 1 à 4, **caractérisé en ce que** trois dispositifs de détection (3) sont agencés en trois positions d'un premier compartiment (2).

6. Système selon l'une quelconque des revendications 1 à 5, **caractérisé en ce que** le calculateur (K₁) effectue un calcul d'une moyenne pondérée du niveau d'eau mesuré par l'ensemble des dispositifs de détection (3) agencés dans le premier compartiment (2) pour calculer l'envahissement moyen d'eau dans ledit compartiment (2).

7. Système selon l'une quelconque des revendications 1 à 6, **caractérisé en ce qu'**au moins un dispositif de détection (3) est fixé à une partie fixe du premier compartiment (2), ladite fixation (20) permettant un degré de liberté dudit dispositif de détection (3) autour d'un axe perpendiculaire à un plafond (21) dudit premier compartiment (2).

8. Système selon l'une quelconque des revendications 1 à 7, **caractérisé en ce qu'**une estimation de l'envahissement du premier compartiment (2) à une proportion donnée de la hauteur dudit premier compartiment (2) est réalisée par une série de calculs de l'évolution de la hauteur d'eau mesurée au sein d'au moins un dispositif de détection (3) pour en déduire un modèle de progression ou de régression de l'envahissement.

9. Système selon la revendication 8, **caractérisé en ce que** le modèle d'envahissement est configuré pour calculer une vitesse d'envahissement et une accélération ou une décélération de l'envahissement.

10. Système selon la revendication 8, **caractérisé en ce qu'**une estimation de l'envahissement total du premier compartiment (2) est réalisée par une série de calculs de l'évolution de la hauteur d'eau mesurée au sein d'au moins un dispositif de détection (3).

11. Système selon la revendication 8, **caractérisé en ce qu'**une estimation de l'envahissement du premier compartiment (2) est réalisée par une série de mesures de la hauteur d'eau au sein d'une pluralité de dispositifs de détection (3), l'ensemble des mesures réalisées au sein d'une pluralité de dispositifs de détection (3) étant utilisé pour calculer une moyenne entre lesdites mesures afin de produire un modèle d'évolution de l'envahissement d'un compartiment (2).

12. Système selon l'une quelconque des revendications 1 à 11, **caractérisé en ce qu'**il comprend :
▪ une étape d'estimation du temps restant avant l'atteinte d'une première donnée caractérisant la stabilité critique de l'engin flottant est évaluée en temps réel, ladite première donnée correspondant au nombre de compartiments envahissables maximal avant de dépasser un seuil de risque donné de chavirement dudit engin flottant ;
▪ une étape d'affichage du temps restant avant l'atteinte de la première donnée sur un afficheur.

13. Système la revendication 12, **caractérisé en ce que** le temps restant avant l'atteinte d'une première donnée caractérisant la stabilité critique de l'engin flottant est estimé à partir d'un ensemble de paramètres comportant :
▪ un nombre de compartiment(s) de l'engin flottant,
▪ une donnée caractérisant la dynamique de l'envahissement de chaque compartiment,
▪ de la première donnée caractérisant la stabilité critique,
ladite estimation comportant une étape de hiérarchisation en continu des compartiments susceptibles d'être considérés comme envahis le plus rapidement afin d'estimer et mettre à jour ledit temps restant.

14. Système selon l'une quelconque des revendications 12 à 13 **caractérisé en ce que** le temps restant avant l'atteinte d'une première donnée caractérisant la stabilité critique de l'engin flottant est également estimé à partir d'un facteur de cloisonnement prédéfini et associé à l'engin flottant.

15. Système selon l'une quelconque des revendications 2 à 14 **caractérisé en ce que** le flotteur comprend un agent à libération prolongé, ledit agent étant agencé sur la partie du flotteur destiné à être immergée lors d'un envahissement, ledit agent à libération prolongée permettant de modifier la transmission de la lumière localement dans le volume d'eau au voisinage du flotteur et permettant de réfléchir tout ou partie du faisceau laser émis par l'émetteur optique.
